(19) Europäisches Patentamt
European Patent Office
Office européen des brevets

(11) **EP 2 689 400 B1**

(12) **FASCICULE DE BREVET EUROPEEN**

(45) Date de publication et mention
de la délivrance du brevet:
**28.04.2021 Bulletin 2021/17**

(21) Numéro de dépôt: **12717363.1**

(22) Date de dépôt: **23.03.2012**

(51) Int Cl.:
**G07D 7/12** *(2016.01)*    **G07D 7/00** *(2016.01)*
**G07D 7/20** *(2016.01)*

(86) Numéro de dépôt international:
**PCT/FR2012/050605**

(87) Numéro de publication internationale:
**WO 2012/131239 (04.10.2012 Gazette 2012/40)**

(54) **PROCÉDÉ ET SYSTÈME D'AUTHENTIFICATION D'UN DOCUMENT SÉCURISÉ**

VERFAHREN UND VORRICHTUNG ZUM PRÜFEN VON SICHERHEITSDOKUMENTE

METHOD AND SYSTEM TO AUTHENTICATE SECURITY DOCUMENTS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.03.2011 FR 1152522**

(43) Date de publication de la demande:
**29.01.2014 Bulletin 2014/05**

(73) Titulaire: **Hologram Industries
77607 Marne La Vallee Cedex (FR)**

(72) Inventeurs:
• **TREMOLADA, Fabio
1095 Lutry (CH)**

• **PIC, Marc M.
F-92100 Boulogne Billancourt (FR)**
• **HOARAU, Mathieu
F-75013 Paris (FR)**

(74) Mandataire: **Cabinet Beau de Loménie
158, rue de l'Université
75340 Paris Cedex 07 (FR)**

(56) Documents cités:
**US-A1- 2003 002 707    US-A1- 2004 188 528
US-A1- 2004 258 274    US-A1- 2005 175 230**

## Description

Domaine de l'invention

La présente invention concerne l'authentification et l'identification de produits mettant en œuvre des étiquettes de sécurité.

Art antérieur

On connaît déjà divers produits ou documents utilisant des étiquettes de traçabilité numérotées comportant un élément de sécurité qui est destiné à assurer une identification du produit ou document muni de ladite étiquette et peut être contrôlé :

- soit par l'œil du contrôleur (par exemple sécurité de type hologramme ou encre variable), idéalement en comparaison avec un élément authentifiant de référence,
- soit par un outil de contrôle automatique spécifique adapté à la technologie mise en œuvre.

Plus particulièrement, on a déjà proposé des procédés d'authentification mettant en œuvre des éclairages spécifiques (par exemple dans le domaine de l'ultraviolet ou de l'infrarouge), comme par exemple dans le document US 2004/0188528 A1.

On a également proposé, dans le document WO 2010 094859, un procédé de sécurisation de documents qui met en œuvre un rétro-éclairage et des filigranes.

Le document WO 9847714 propose un procédé de fabrication d'un film à motif non reproductible par lecture optique pour la protection de documents. Selon ce procédé, on réalise une empreinte plus brillante en creux dans la face externe du film pour empêcher la reproduction par lecture optique.

Le document WO 2007 087498 décrit par ailleurs un procédé de sécurisation selon lequel on mesure et on stocke un albédo directionnel d'un article particulier tel qu'une carte d'identité puis, lorsque l'on veut ensuite confirmer qu'il s'agit bien du même article particulier, on mesure à nouveau la fonction d'albédo et on recherche la correspondance par rapport aux données précédemment stockées. Ce procédé nécessite toutefois de prendre plusieurs clichés en modifiant les orientations relatives de l'article et de l'appareil de prise de vue.

On connaît également, par exemple par le document US 2005/0175230 A1, des dispositifs de reconnaissance de billets de banque utilisant une prise de vue photographique et une comparaison avec des images pré-enregistrées.

Objet et description succincte de l'invention

La présente invention a pour but de remédier aux inconvénients des procédés et systèmes d'authentification de l'art antérieur.

En particulier, l'invention vise à améliorer le niveau de sécurité en rendant plus facile la détection de falsification par photocopie ou autre moyen de reproduction, sans qu'il soit nécessaire d'utiliser d'appareil spécialisé, de conditions d'éclairage dans des domaines de fréquence particuliers hors du domaine de la lumière visible, ni de provoquer des positionnements relatifs multiples entre un document à contrôler et un appareil de contrôle.

L'invention vise encore à permettre l'authentification automatique d'un document sécurisé, et le cas échéant une identification simultanée de ce document.

L'invention vise également à permettre de réaliser un contrôle d'authenticité avec un outil grand public non dédié à cette opération.

Ces buts sont atteints conformément à l'invention, grâce à un procédé d'authentification automatique d'un document sécurisé comportant au moins une partie formant: étiquette, telle que revendiqué dans la revendication 1.

Entre les premières et deuxièmes conditions d'éclairement dans le domaine de fréquences de la lumière visible, ce sont les caractéristiques géométriques des conditions d'éclairement qui varient, telles que la taille de la source ou la position relative de la source par rapport à la position d'observation et au support, tandis que la totalité du spectre de la lumière visible est prise en compte et il n'est pas nécessaire de faire appel à des observations en dehors du spectre de la lumière visible.

Le terme holographique comprend tout élément à structure diffractante ou diffusante ou une combinaison de ces structures connus de l'homme du métier et couramment utilisés dans le domaine de la sécurité.

Selon une caractéristique particulière de l'invention, on procède à l'impression d'une étiquette authentique comprenant au moins ladite première zone à éléments optiquement variables du premier type et une deuxième zone juxtaposée à ladite première zone et comprenant des éléments graphiques aléatoires d'identification.

Dans ce cas, de préférence, lesdites première et deuxième zones sont divisées chacune en une pluralité de sous-zones, et les sous-zones des première et deuxième zones sont juxtaposées en alternance de façon imbriquée.

A titre d'exemple, chaque sous-zone peut être essentiellement rectangulaire avec une largeur comprise entre 0,5 et 5 mm et de préférence comprise entre 1 et 3 mm.

Selon un mode particulier de réalisation, les éléments optiquement variables définissent un motif holographique géométriquement invariant.

Dans ce cas, selon un aspect de l'invention, afin de créer une image de référence, on procède aux étapes suivantes (enrôlement simplifié) :

i) photographie d'une étiquette

ii) localisation d'une mire sur l'étiquette,

iii) normalisation d'une zone d'intérêt de l'étiquette grâce à la localisation de la mire,

iv) caractérisation des contours de la zone d'intérêt dans laquelle est située ladite première zone à éléments optiquement variables.

v) Création d'une empreinte par structuration et sauvegarde de ladite empreinte en tant qu'empreinte de référence.

Selon un autre mode particulier de réalisation, les éléments optiquement variables définissent un motif holographique géométriquement variable.

Dans ce cas, selon un aspect de l'invention, par exemple préalablement à une étape de mise en service de l'étiquette (activation), afin de créer une base de données de références, on procède aux étapes suivantes (enrôlement) :

i) photographie d'une étiquette

ii) localisation d'une mire sur l'étiquette,

iii) normalisation d'une zone d'intérêt de l'étiquette grâce à la localisation de la mire,

iv) identification de l'étiquette par lecture d'une partie codée située dans la zone d'intérêt et caractérisation des contours de la zone d'intérêt dans laquelle est située ladite première zone à éléments optiquement variables.

v) Création d'une empreinte par structuration et sauvegarde de cette empreinte en tant qu'empreinte numérique de référence indexée par un identifiant dans une base de données de référence.

Selon un mode particulier de réalisation, on stocke la base de données de référence dans un serveur déporté.

Le processus d'authentification repose sur la prise successive de deux photographies, ou d'un nombre de photographies supérieur à deux, en rafale, dans un court intervalle de temps, de préférence inférieur ou égal à une seconde dans des conditions d'éclairage différentes.

Avantageusement, l'une des première et deuxième conditions d'éclairement consiste en un éclairage à l'aide d'un flash tandis que l'autre des première et deuxième conditions d'éclairement consiste en un éclairage à lumière ambiante sans flash.

La différence de certains aspects graphiques est alors mesurable entre deux photographies prises dans des conditions d'éclairage différentes. Ces différences ne sont en effet perceptibles que sur des surfaces réfléchissantes dans l'axe de la prise de vue, avec des propriétés de réflexion supérieures à celles d'un support ordinaire tel que du papier, du carton ou une matière plastique, ces surfaces réfléchissantes constituant des éléments optiquement variables. Il est alors possible, à l'aide d'un traitement d'image discriminant, de déterminer si l'étiquette photographique dispose bien de ces surfaces réfléchissantes et se distingue d'une simple copie au moyen d'encres usuelles. Il est ainsi possible d'authentifier une étiquette par rapport à des contrefaçons simples.

Selon un mode particulier de réalisation, on effectue localement à l'aide de l'unité de calcul de l'appareil de prise de vue l'étape de calcul d'une empreinte numérique de vérification, on transmet audit serveur par l'unité de communication dudit appareil de prise de vue ladite empreinte numérique de vérification pour procéder au sein de ce serveur à l'étape de comparaison de l'empreinte numérique de vérification et de l'empreinte numérique de référence et à l'étape d'authentification simple et d'authentification identifiée.

Selon un autre mode particulier de réalisation, on transmet audit serveur par l'unité de communication dudit appareil de prise de vue lesdites première et deuxième images de vérification, et on effectue au sein dudit serveur les étapes de calcul d'une empreinte numérique de vérification, de comparaison de l'empreinte numérique de vérification et de l'empreinte numérique de référence et à l'étape d'authentification simple et d'authentification identifiée.

Le procédé peut en outre comprendre une étape finale consistant à transmettre à l'unité de communication de l'appareil de prise de vue le résultat des étapes d'authentification et d'identification réalisées sur le serveur.

Dans le cas où les éléments optiquement variables définissent un motif holographique géométriquement invariant, selon un mode particulier de réalisation, l'ensemble des traitements peuvent être réalisés localement, et en particulier, le procédé peut dans ce cas être caractérisé en ce que l'on stocke l'empreinte numérique de référence localement dans ladite unité de mémoire de l'appareil de prise de vue et en ce que l'on effectue localement à l'aide de l'unité de calcul de l'appareil de prise de vue les étapes de calcul d'authentification consistant à vérifier que l'étiquette à vérifier comporte les éléments optiquement variables attendus.

Dans le cas où les éléments optiquement variables définissent un motif holographique variable, celui-ci peut lui-même comprendre des éléments graphiques aléatoires d'identification, de sorte que les éléments optiquement variables activés dans l'une des deux conditions d'éclairement différentes (par exemple en présence d'un éclair de flash) peuvent servir à la fois d'éléments d'authentification et d'éléments d'identification d'une étiquette.

Dans le procédé selon l'invention, lors de l'étape de création d'une empreinte numérique, selon un premier mode de réalisation possible, on procède à une caractérisation géométrique des éléments optiquement variables à partir de l'image tandis que selon un deuxième mode de réalisation possible, on procède à une caractérisation de l'étiquette par calcul de descripteurs basés sur des approches de caractérisation numérique globale.

L'invention concerne également une étiquette munie d'éléments optiquement variables pour document sécurisé à authentifier, caractérisée en ce qu'elle comprend une zone d'intérêt avec au moins une première zone à éléments optiquement variables présentant des propriétés de réflexion différentes à la surface de l'étiquette pour une source de lumière dans le domaine de fréquence de la lumière visible orientée de façon prédéterminée par rapport à ladite surface et une deuxième zone juxtaposée à ladite première zone et comprenant des éléments graphiques aléatoires d'identification, lesdites première et deuxième zones étant divisées chacune en une pluralité de sous-zones agencées de telle manière que les sous-zones des première et deuxième zones sont juxtaposées en alternance de façon imbriquée.

### Brève description des dessins

D'autres caractéristiques et avantages de l'invention ressortiront de la description suivante de modes particuliers de réalisation, donnés à titre d'exemples non limitatifs, en référence aux dessins annexés, sur lesquels :

- la figure 1 est une vue schématique d'un exemple d'étiquette de sécurité selon l'invention,
- la figure 2 est un exemple d'image résultant de la soustraction entre deux photographies d'une zone d'intérêt d'une étiquette authentique prises successivement dans des conditions d'éclairement différentes respectivement avec et sans flash, dans une lumière ambiante,
- la figure 3 est un exemple d'image résultant de la soustraction entre deux photographies d'une zone d'intérêt d'une étiquette avec imitation d'un laminat,
- les figures 4 et 5 représentent des histogrammes des images différentes des figures 2 et 3 respectivement,
- la figure 6 est un organigramme montrant diverses étapes d'un procédé de prise d'empreinte et de mise en base de données relatif à un document sécurisé devant être soumis à un procédé d'authentification selon l'invention,
- la figure 7 est un organigramme montrant diverses étapes d'un procédé de contrôle d'un document sécurisé dont l'authenticité est à vérifier conformément à l'invention,
- la figure 8 est un organigramme montrant diverses étapes du procédé d'authentification selon l'invention avec diverses variantes de réalisation,
- la figure 9 est un schéma-bloc d'un exemple de système d'authentification d'un document sécurisé, conformément à l'invention,
- la figure 10 est une vue en coupe d'un exemple de document sécurisé en forme d'étiquette adapté pour être soumis à un procédé d'authentification selon l'invention, et
- la figure 11 est une vue en coupe d'un exemple d'étiquette de sécurité pouvant être fixée sur un produit support et adaptée pour être soumise à un procédé d'authentification selon l'invention.

### Description détaillée de modes particuliers de l'invention

D'une manière générale, l'invention concerne des objets ou documents sécurisés pouvant être équipés d'une étiquette de sécurité, tels que des produits de consommation, des visas, des articles divers ou leurs emballages devant être équipés d'étiquettes de traçabilité ou de protection et pouvant donner lieu à une identification et/ou une authentification. Il est aussi envisageable dans certains cas de s'affranchir du support étiquette et de marquer directement le produit (cas des documents tels que des vignettes de taxes, des titres de paiement,...).

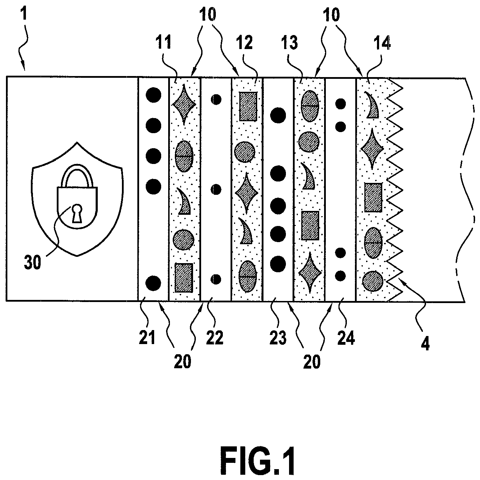

La figure 1 montre un exemple d'étiquette de sécurité 1 conforme à l'invention et pouvant équiper toutes sortes de documents ou articles à sécuriser.

L'étiquette de sécurité 1 (qui sera désignée simplement par "étiquette" dans la suite de la description) comprend sur au moins une de ses faces principales une zone 10 à éléments optiquement variables constitués par des éléments métallisés aléatoirement découpés dans une surface présentant des microstructures optiques reconnaissables par la prise successive de deux photos (l'une avec flash et l'autre sans flash). Les éléments optiquement variables peuvent être réalisés à l'aide de motifs de démétallisation constitués par des éléments graphiques métallisés formés dans une bande transparente ou par des éléments graphiques transparents aléatoirement formés dans une bande métallisée holographique.

Avantageusement, la partie optiquement variable (10) se prolonge par une surface diffractante complexe, représentant par exemple une image diffractante (30) ou un hologramme, élaborée de manière à éviter la contrefaçon par utilisation d'un simple marquage à base d'encre métallique.

L'étiquette 1 comprend en outre de façon préférentielle une zone 20 distincte de la zone 10, dans laquelle sont formés des éléments graphiques aléatoires d'identification, qui peuvent être par exemple des matrices de points en noir et blanc ou en couleur répartis de façon aléatoire dans cette zone 20.

L'étiquette 1 comprend en outre de préférence une mire (non représentée) pouvant être par exemple créée avec des croisements de traits horizontaux et verticaux délimitant les zones 10 et 20 juxtaposées, cette mire permettant de corriger d'éventuels effets de distorsion lors de prises de vue.

Dans le mode particulier de réalisation représenté sur la figure 1, qui est un mode de réalisation préférentiel, mais n'est pas limitatif, la zone 10 à éléments optiquement variables et la zone 20 à éléments graphiques aléatoires d'identification sont divisées chacune en une pluralité de sous-zones 11 à 14 et 21 à 24 respectivement, les sous-zones 11 à 14 de la première zone 10 et les sous-zones 21 à 24 de la deuxième zone 20 étant juxtaposées en alternance de façon imbriquée.

Chaque sous-zone 11 à 14 et 21 à 24 peut par exemple présenter une forme essentiellement rectangulaire avec une largeur comprise entre 0,5 et 5 mm et de préférence entre 1 et 3 mm.

Le nombre de sous-zones 11 à 14 et 21 à 24 qui se répètent n'est pas limité. Selon un exemple particulier, les sous-zones 21 à 24 peuvent présenter une largeur réduite d'environ 1 mm et les sous-zones 11 à 14 peuvent présenter une largeur égale ou supérieure, par exemple de 1 à 3 mm.

Si la mise en œuvre de zones 10 et 20 distinctes et imbriquées permet d'augmenter la sécurité, l'invention s'applique également au cas d'une étiquette ne comportant qu'une zone 10 à éléments optiquement variables, ceux-ci pouvant le cas échéant constituer également eux-mêmes des éléments graphiques aléatoires d'identification.

L'étiquette de sécurité 1 peut en outre comprendre un code d'identification graphique classique, réalisé avec une encre non optiquement variable, tel qu'un code à barres, un code à barres bidimensionnel ou une Datamatrix.

Les éléments optiquement variables de la zone 10 peuvent être des éléments graphiques formant des motifs divers, tels que des symboles ou des caractères alpha-numériques par exemple.

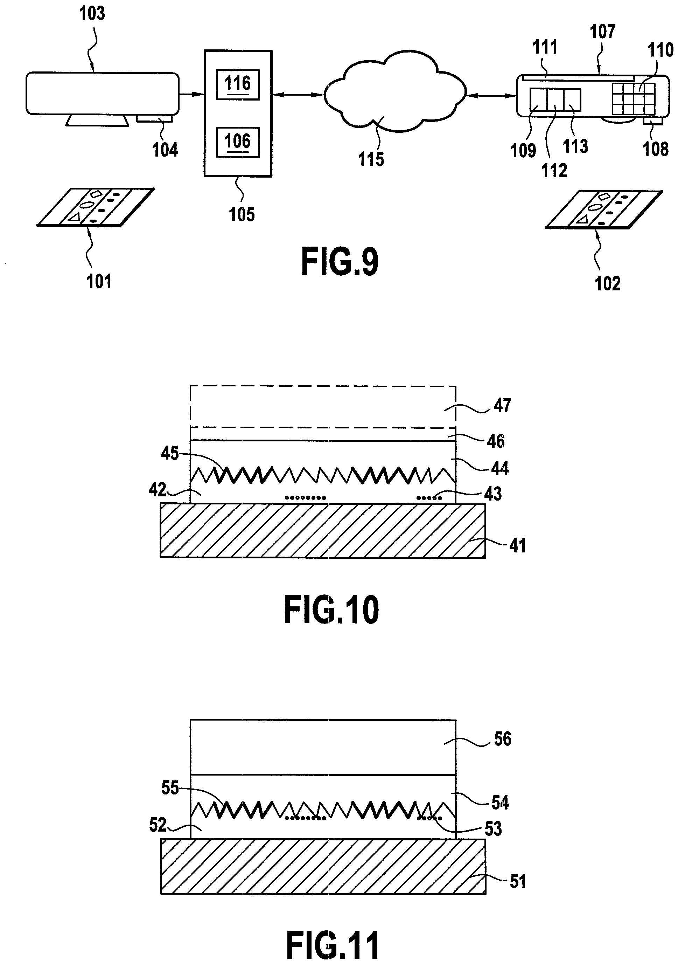

Les figures 10 et 11 montrent en coupe des exemples de réalisation possibles d'étiquettes sécurisées se prêtant à une authentification et le cas échéant à une authentification identifiée par un procédé selon l'invention.

La figure 10 concerne une étiquette en papier 41 constituant un substrat sur lequel un laminat 42 à 45 a été transféré. Lors de la fabrication on utilise un film support 47, par exemple en polyéthylène téréphtalate (PET), sur lequel est formée une couche de détachement 46 constituée par exemple par de la cire. On forme sur la couche de détachement 46 une couche de sécurité 44 comprenant un vernis de protection et une microstructure qui comprend une métallisation partielle 45 constituant des éléments optiquement variables. Des marques 43 sont imprimées sur la couche de sécurité 44 ou sur une couche associée 42 comprenant un adhésif thermo-réactivable. Une fois le processus de fabrication terminé et le laminat 42 à 45 fixé à l'aide de la couche adhésive 42 sur un support en papier 41, le film support 47 ayant servi à la fabrication et la couche de détachement 46 (en pointillés sur la figure 10) sont éliminés pour constituer une étiquette sécurisée sur support papier comprenant les éléments 41 à 45.

La figure 11 concerne une étiquette en polyester 56 tel que du PET constituant un support pour un laminat 52 à 55 et pouvant être collée directement sur un support 51 constitué par un produit ou emballage. Lors de la fabrication, on forme, par exemple par estampage, une couche micro-structurée 54 de sécurité qui comprend une métallisation partielle 55 constituant des éléments optiquement variables. Des marques 53 sont imprimées sur la couche micro-structurée 54. Une couche associée 52 comprenant un adhésif permanent permet la fixation de l'ensemble des éléments 52 à 56 sur le support 51, qui peut par exemple être en papier siliconé. Une couche de contraste peut en outre le cas échéant être interposée entre la couche micro-structurée 54 et la couche adhésive 52 de manière à ce que les caractéristiques du substrat ne viennent pas fausser la comparaison avec l'empreinte de référence.
Avantageusement, une couche complémentaire anti-spéculaire ou diffusante pourra être appliquée au moins partiellement sur l'étiquette par exemple par impression sur la couche opposée à la couche adhésive.

Le système d'authentification selon l'invention comprend essentiellement les éléments de base illustrés sur la figure 9.

Sur la figure 9 un premier appareil de prise de vue 103, muni éventuellement d'un flash 104, sert à prendre des clichés de référence d'une étiquette sécurisée de référence 101 pouvant être du type décrit plus haut en référence à la figure 1. Un serveur 105 est équipé d'une unité centrale de traitement 116 et d'une unité 106 de stockage d'une base de données des références constituées à partir des informations transmises à partir de l'appareil de prise de vue 103.

Les photographies de l'étiquette 101 de référence prises en lumière ambiante seule ou le cas échéant selon une variante, successivement sans flash et avec flash, mais dans tous les cas dans le domaine de la lumière visible, avec l'appareil de prise de vue 103 qui ne doit comporter un flash que si l'on adopte la variante précitée, sont envoyées sous forme numérique au serveur 105 pour être traitées et permettre le calcul d'empreintes numériques et l'alimentation de la base de données 106 en données de référence (empreinte numérique) liées à l'étiquette authentique 101.

De façon plus particulière, pour chaque prise de vue, on localise une mire sur l'étiquette 101 ; on extrait et normalise une région d'intérêt de l'étiquette 101 grâce à la localisation de la mire ; on identifie l'étiquette 101 par la lecture d'un code d'identification, tel que celui formé dans la zone 20 de la région d'intérêt ; et on caractérise des contours de la zone d'intérêt (qui peut par exemple être limitée par la frontière 4 de l'étiquette 1 de la figure 1).

A l'intérieur de la zone d'intérêt on caractérise une zone 10 contenant au moins un élément optiquement variable et on établit une signature numérique pour la prise de vue traitée.

Lorsque chaque prise de vue a été signée numériquement, on définit une empreinte numérique qui est rangée dans la base de données 106 avec un identifiant pour caractériser l'étiquette authentique 101.

Le serveur 105 peut lui-même être constitué de façon classique à l'aide d'un ordinateur. L'appareil de prise de vue 103 peut être constitué par tout type d'appareil photographique numérique qui peut être distinct de l'appareil de prise de vue 107 ou le cas échéant confondu avec celui-ci.

Lors de l'examen d'une étiquette "suspecte" 102 dont l'authenticité est à vérifier, on procède à l'aide de l'appareil de prise de vue 107, en prenant successivement sans flash et avec flash, dans le domaine de la lumière visible, deux photographies de l'étiquette 102 qui peuvent être envoyées sous forme numérique au serveur 105 pour être traitées.

Un appareil de prise de vue 107 équipé d'un flash 108, d'une unité de communication 109, d'une unité d'entrée 110, d'une unité d'affichage 111, d'un processeur 112 et d'une mémoire 113 sert à prendre des clichés d'une étiquette sécurisée "suspecte" 102 dont l'authenticité est à étudier, et à communiquer avec le serveur 105 par l'intermédiaire d'un réseau de communication 115.

L'appareil de prise de vue 107 est avantageusement constitué par un appareil de contrôle générique portable, tel qu'un téléphone intelligent portable muni des fonctions de prise de vue avec flash. L'appareil de prise de vue 107 peut être constitué par tout autre type d'appareil grand public non dédié à une opération d'authentification et muni de moyens de prise de vue avec flash et de communication, tel qu'un assistant personnel numérique ou un ordinateur.

Lors du contrôle à l'aide d'un appareil de prise de vue 107 muni d'un flash 108, on photographie l'étiquette 102 au moins deux fois dans un bref intervalle de temps (par exemple avec un écart compris entre 10 millisecondes et 1 seconde, mais cette plage de valeurs de temps n'est pas limitative et pourrait être plus longue), l'une des prises de vue se faisant sans flash, avec la simple lumière ambiante naturelle ou artificielle, et l'autre prise de vue se faisant avec flash dans des conditions d'éclairement qui sont suffisamment éloignées et distinctes de celles de la simple lumière ambiante, toutes les prises de vue s'effectuant dans le même domaine de fréquences de la lumière visible. On notera que les prises de vue successives avec et sans flash sont rapprochées dans le temps, de telle sorte que l'on conserve, pour les différentes prises de vues d'un même objet, des dispositions géométriques similaires entre l'appareil photographique et l'objet photographié. Une éventuelle distorsion présente sur les différentes prises de vue relatives à un même objet sera ainsi en principe identique ou très similaire pour l'ensemble des prises de vue.

L'ordre des prises de vue avec et sans flash est indifférent. Les deux prises de vues permettent le contrôle de la caractéristique optiquement variable de l'étiquette, puis le calcul d'empreinte numérique, puis la comparaison avec une empreinte numérique correspondant à l'étiquette de sécurité de référence authentique, sans qu'il soit nécessaire de faire appel à des éclairages en dehors de la plage de fréquences de la lumière visible.

Lors de la prise de vue avec flash, les éléments optiquement variables de la zone 10 sont actifs, de sorte qu'il est possible de caractériser ces éléments et d'en quantifier les différences avec la prise de vue sans flash.

L'ajout d'un flash lors de l'une des prises de vue permet notamment :

- l'annihilation des effets des sources de lumière secondaires (autres que le flash) sur le rendu de la photo, car les éléments optiquement variables réagissent fortement au flash en s'activant. Les sources secondaires qui en pratique sont multiples et variées sont difficilement maitrisables et le flash dans les conditions de prise de vue optimales (c'est-à-dire en champ proche) permet d'atténuer leurs effets,
- l'uniformisation de la prise de vue dans des proportions connues et maîtrisées d'avance, ce qui autorise l'utilisation de cette prise de vue avec flash comme référence.

Pour chaque prise de vue de l'étiquette 102, on procède comme pour une photographie de l'étiquette 101, avec localisation d'une mire, extraction et normalisation d'une région d'intérêt, identification de l'étiquette, caractérisation des contours de la zone d'intérêt et établissement d'une empreinte numérique pour la prise de vue traitée, avec un identifiant pour caractériser l'étiquette suspecte 102, puis on caractérise la différence entre les deux photographies de la zone 10 censée contenir au moins un élément optiquement variable.

Une fois que l'étiquette suspecte 102 a été authentifiée grâce à la caractérisation des éléments optiquement variables calculée à partir des deux photos et que cette étiquette 102 a été correctement identifiée, on se réfère à l'empreinte numérique de référence de l'étiquette authentique 101 dont l'identifiant correspond à celui de l'étiquette suspecte 102 à vérifier et qui est enregistrée dans la base de données 106 comme caractérisant l'étiquette authentique 101.

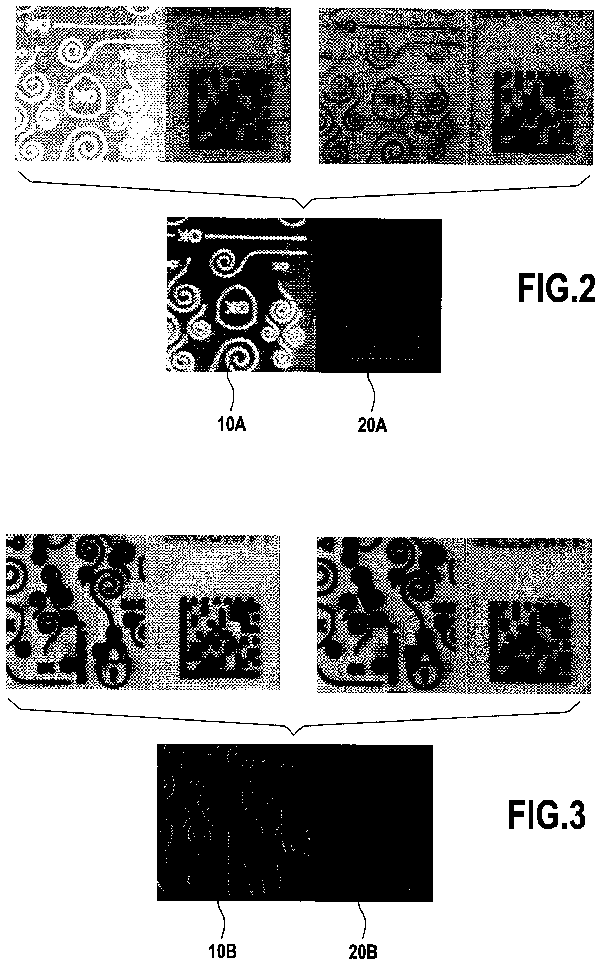

A titre d'exemple, on a représenté sur la figure 2 une image résultant de la soustraction entre deux photographies d'une zone d'intérêt (après passage en niveaux de gris) d'une étiquette authentique prises dans des conditions d'éclairement différentes respectivement avec et sans flash, dans une lumière ambiante peu intense. On voit sur cette image une zone contrastée contenant des éléments optiquement variables (éléments métalliques).

La figure 3 représente une image résultant de la soustraction entre deux photographies d'une zone d'intérêt (après passage en niveaux de gris) d'une étiquette suspecte avec imitation d'un laminat (couche laminaire comprenant par exemple les éléments 42 à 45 de la figure 10 ou les éléments 52 à 55 de la figure 11), prises dans des conditions d'éclairement différentes respectivement avec et sans flash. On constate sur l'image de la figure 3 que les motifs formés dans la zone censée contenir des éléments optiquement variables (tels que les éléments 45 et 55 des figures 10 et 11) sont là aussi à peine perceptibles.

Le procédé selon l'invention permet selon les cas de réaliser une authentification simple ou une authentification identifiée.

Si l'on souhaite effectuer une authentification simple (contrôle uniquement de la caractéristique optiquement variable), sans utiliser les descripteurs géométriques de ces éléments optiquement variables, donc sans utiliser l'empreinte, cette authentification peut être par exemple effectuée à l'aide d'une étude d'histogramme.

On rappelle qu'un histogramme est un graphique statistique permettant de représenter la distribution des intensités des pixels d'une image, c'est-à-dire le nombre de pixels pour chaque intensité lumineuse. Par exemple, l'histogramme d'une image en 256 niveaux de gris sera représenté par un graphique possédant 256 valeurs en abscisses, qui par convention vont du plus foncé (à gauche) au plus clair (à droite) et le nombre de pixels de chaque niveau de gris figure en ordonnée.

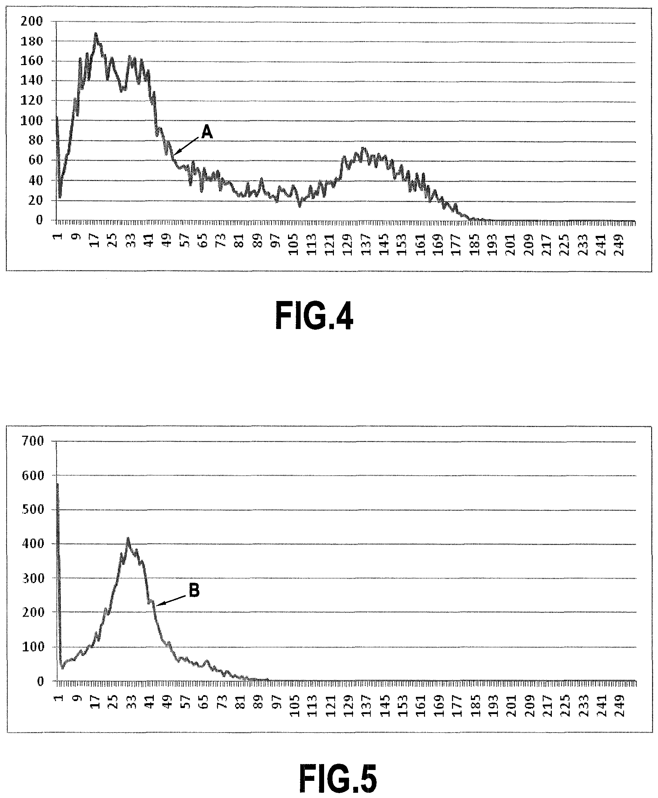

Les figures 4 et 5 représentent à titre d'exemples respectivement les histogrammes A et B correspondant aux images différence entre une photo au flash et une photo sans flash illustrées sur les figures 2 et 3.

Sur l'histogramme A de la figure 4, on voit clairement qu'il y a un premier maximum local (qui constitue aussi un maximum global) très marqué pour une valeur de niveau de gris inférieure à 50, puis un second maximum local pour une valeur de niveau de gris supérieure à 100, qui se situe dans l'exemple considéré vers la valeur 140, qui représente la valeur des pixels du contour des éléments portés par le laminat présentant un comportement optiquement variable entre les deux prises de vue et révèle qu'il s'agit ici d'une étiquette originale authentique.

L'histogramme B de la figure 5, qui provient d'une photocopie avec imitation d'un laminat, montre un premier maximum local (qui est aussi global) vers la valeur 0 et un deuxième maximum local significatif situé vers la valeur de niveau de gris 33, puis plus aucune valeur présentant une ordonnée non nulle.

Les différences entre l'histogramme A d'une part et l'histogramme B d'autre part sont flagrantes. Dans le premier cas, il existe au moins un maximum conséquent (par exemple dans le cas considéré avec un nombre de pixels en ordonnée supérieur à 50) au-dessus de valeurs de pixels prédéterminées (par exemple dans le cas considéré avec des valeurs de niveau de gris supérieures à 100).

Dans l'exemple des figures 4 et 5, une règle simple pour distinguer une étiquette originale avec des éléments optiquement variables d'une copie falsifiée avec une simple image des éléments optiquement variables peut être :
s'il existe un ou plusieurs niveaux de gris avec x > 100, tels que le nombre de pixels pour ces niveaux de gris y(x) soit supérieur à 50, alors il s'agit d'une étiquette originale contenant des éléments optiquement variables qui ont réagi à l'éclairage par le flash alors qu'ils n'avaient pas réagi lors d'un simple éclairage à lumière ambiante.

L'authentification simple est avantageusement complétée par une étape de comparaison de l'empreinte numérique de vérification et de l'empreinte numérique de référence (unique). Cette comparaison nécessite le calcul de la distance entre ces deux empreintes numériques et la comparaison de cette distance par rapport à un seuil prédéterminé pour n'authentifier l'étiquette à vérifier (102) du document sécurisé à authentifier que si cette distance est inférieure ou égale audit seuil.

Dans le cas d'une authentification identifiée, plusieurs méthodes sont possibles pour l'étape de comparaison d'empreinte. Dans ce cas, chaque étiquette authentique possède une empreinte unique enregistrée dans la base de données de références indexée par un identifiant.

A titre d'exemple, on peut effectuer une approche locale de caractérisation d'histogramme. Dans ce cas, le principe est de comparer le niveau de luminance d'un pixel avec les niveaux de ses voisins. Ce descripteur permet de détecter des contours et d'en insérer les caractéristiques dans une empreinte.

Le travail de description est effectué sur une étiquette authentique 101 lors de son enrôlement dans la base de données de référence 106 avec enregistrement d'une empreinte numérique caractéristique de l'étiquette authentique 101.

Lors du contrôle d'une étiquette suspecte 102, le même travail est effectué pour définir également une empreinte numérique caractéristique de cette étiquette suspecte 102.

Les empreintes numériques caractéristiques de l'étiquette suspecte 102 et d'une étiquette authentique 101 correspondante sont chacune représentées par un vecteur dont on calcule les distances respectives de l'une par rapport à l'autre. Il existe plusieurs méthodes possibles pour calculer cette distance. L'une d'entre elles est l'intersection d'histogramme.

7

Dans le cas de la variante où deux photographies successives de l'étiquette authentique 101 ont été prises dans des conditions d'éclairement différentes, on calcule alors la distance entre les signatures numériques "différence" de l'étiquette authentique 101 de référence et de l'étiquette suspecte 102 à vérifier.

Dans le cas où l'étiquette suspecte 102 est une simple photocopie, la différence entre les deux prises de vue de l'étiquette suspecte 102 est négligeable, car la région d'intérêt ne comporte plus de véritable élément optiquement variable et ne s'active plus sous l'effet d'une source de lumière coaxiale à l'axe de la prise de vue lors de l'éclairage au flash, de sorte que la distance entre l'empreinte numérique "différence" de l'étiquette authentique 101 (correspondant à une valeur élevée) et l'empreinte numérique "différence" de l'étiquette suspecte 102 (correspondant à une valeur très faible) est élevée, ce qui permet de discriminer de cette manière une étiquette suspecte 102 non authentique.

Ceci peut être exprimé de la manière suivante : soit

$$\text{Delta 1 de référence} = F[f \text{ (photo de référence Flash)} - f \text{ (photo de référence non flash)}]$$

et soit

$$\text{Delta 2 de suspect} = F[f \text{ (photo suspecte Flash)} - f \text{ (photo suspecte non flash)}],$$

si Delta 2 est inférieur ou égal à un seuil prédéterminé, on estime qu'aucun élément optiquement variable n'est présent dans l'étiquette suspecte 102 et celle-ci est considérée comme non valide.

Si Delta 2 est supérieur audit seuil prédéterminé et si en outre Delta 1 = Delta 2, alors l'étiquette suspecte 102 est considérée comme authentifiée.

Si Delta 2 est supérieur audit seuil prédéterminé et si en outre /Delta 1 - Delta 2/ $\geq \varepsilon$ où $\varepsilon$ est une valeur seuil non nulle, alors l'étiquette suspecte 102 est considérée comme étant un faux.

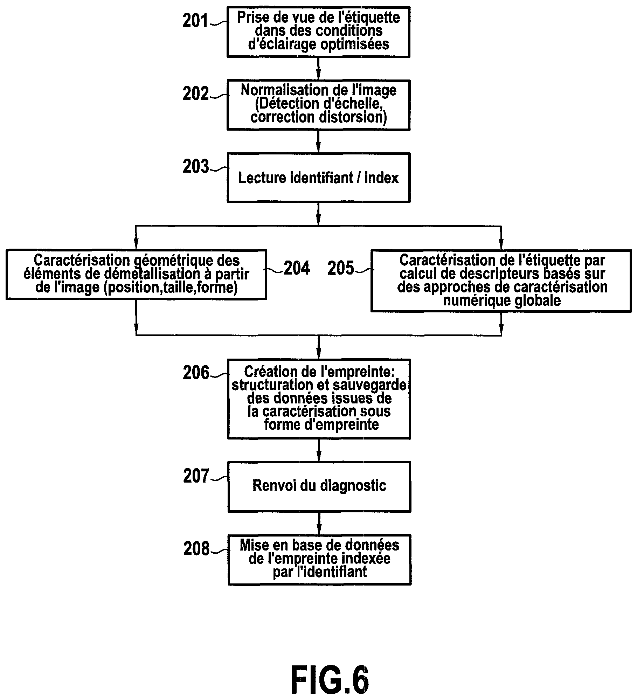

Les figures 6 à 8 sont des organigrammes montrant diverses mises en œuvre possibles du procédé d'authentification selon l'invention.

Le procédé selon l'invention peut s'appliquer à des cas où les éléments optiquement variables définissent un motif holographique géométriquement invariant, auquel cas il est possible de réaliser une authentification simple, c'est-à-dire en combinaison avec une empreinte unique, laquelle authentification simple consiste à confirmer que l'étiquette est bien porteuse de l'effet optique, mais ne précise pas de quelle étiquette il s'agit.

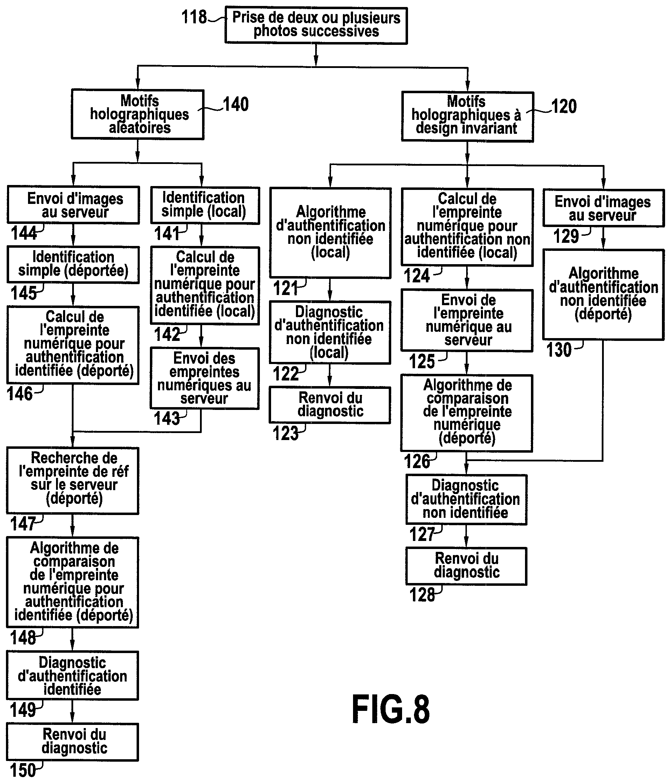

Plusieurs exemples de ces modes de réalisation sont illustrés sur la figure 8 comme découlant de l'étape 120 selon laquelle les étiquettes ayant donné lieu à une prise de deux ou plusieurs photographies successives à l'étape 118 à l'aide d'un appareil de prise de vue 107 muni au moins d'un flash 108, d'une unité de communication 109, d'une unité de mémoire 113, d'une unité de calcul 112, d'une unité d'affichage 111 et d'une unité d'entrée 110, tel qu'un téléphone intelligent portable, comprennent des motifs holographiques à design invariant.

Dans le mode de réalisation illustré par les étapes 121 à 123, tout le processus de traitement est effectué localement au niveau de l'appareil de prise de vue intelligent 107. Dans ce cas, la base de données de référence, qui comprend une unique empreinte de référence, puisque le motif holographique est invariant, est stockée dans la mémoire 113 de l'appareil de prise de vue 107.

On effectue localement, à l'étape 121, à l'aide de l'unité de calcul 112 de l'appareil de prise de vue 107, les étapes de calcul d'une empreinte numérique de vérification, à partir des images successives prises à l'étape 118, et de comparaison de l'empreinte numérique de vérification calculée localement et de l'empreinte numérique de référence stockée dans la mémoire 113 de l'appareil de prise de vue 107.

A l'étape 122 il est effectué un diagnostic local d'authentification simple, à partir des images successives prises à l'étape 118 et à l'étape 123, on peut procéder à un envoi du diagnostic en utilisant l'unité de communication 109.

Selon un autre mode de réalisation illustré par les étapes 124 à 128, on procède localement à l'étape 124, au calcul d'une empreinte numérique de vérification, à partir des images successives prises à l'étape 118, dans l'unité de calcul 112 de l'appareil de prise de vue 107.

A l'étape 125, on procède à l'envoi, par l'unité de communication 109 de l'appareil de prise de vue, de l'empreinte numérique de vérification au serveur 105 qui effectue, à l'étape 126 suivante, une comparaison de l'empreinte numérique de vérification à une empreinte numérique de référence stockée dans la base de données 106 du serveur 105.

L'étape 127 correspondant à un diagnostic d'authentification simple à partir des images successives prises à l'étape 118 et l'étape 128 correspond au renvoi du diagnostic vers l'appareil de prise de vue 107 par l'unité de communication 109, ou la retransmission de ce diagnostic vers d'autres destinataires.

Dans le mode de réalisation illustré par les étapes 129 et 130, on procède à l'étape 129 à l'envoi au serveur 105 des images résultant des photographies successives de vérification prises à l'étape 118 par l'appareil de prise de vue 107, sans qu'il soit calculé d'empreinte numérique. A l'étape 130, on procède dans le serveur 105, à l'aide d'un algorithme d'authentification simple, à une comparaison entre les images reçues, à l'étape 129, de l'appareil de prise de vue 107, et les images de référence stockées dans la base de données 106 du serveur 105.

Après l'étape 130, on revient vers l'étape 127 correspondant à un diagnostic d'authentification simple, à partir des images successives prises à l'étape 118.

A l'étape 128 on procède au renvoi du diagnostic vers l'appareil de prise de vue 107 par l'unité de communication 109 ou la retransmission de ce diagnostic vers d'autres destinataires.

Le procédé décrit dans les modes de réalisation précédents dans le cas où les éléments optiquement variables définissent un motif holographique géométriquement invariant, peut également être mis en œuvre avec une étape supplémentaire d'identification d'une étiquette à partir de la lecture d'un identifiant simple, tel qu'un code barre, un code barre bidimensionnel ou une Datamatrix, par exemple. On effectue alors une identification par un code numérique de façon indépendante de l'authentification.

Une telle phase d'identification simple peut être suivie par une phase d'identification via une empreinte numérique de référence dans le cas où l'empreinte numérique prend en compte par exemple la position des éléments holographique à design invariant par rapport à l'étiquette ou bien à des éléments imprimés sur l'étiquette.

Selon d'autres modes de réalisation illustrés sur la figure 8, les éléments optiquement variables définissent un motif holographique géométriquement variable, c'est-à-dire aléatoire ou non déterministe.

Ces modes de réalisation alternatifs de la figure 8 sont illustrés comme découlant de l'étape 140 selon laquelle les étiquettes ayant donné lieu à une prise de deux ou plusieurs photographies successives à l'étape 118 à l'aide de l'appareil de prise de vue 107 comprennent des motifs holographiques à design aléatoire. Il est alors possible de réaliser une authentification identifiée via une empreinte numérique de référence dans une base de données de référence.

L'empreinte numérique calculée sur chacune des prises de vue successives en exposition avec flash et en exposition sans flash, ainsi qu'une empreinte numérique calculée sur la différence entre les deux images résultant de ces prises de vue caractérisent les contours et le pouvoir réflectif de ces contours en exposition avec flash et sans flash.

Si le motif holographique est variable, l'empreinte numérique est elle-même variable sur chaque étiquette et donc unique pour chacune de celles-ci, ce qui permet une authentification identifiée, tandis que lorsque le motif holographique est fixe, l'empreinte numérique est commune à toutes les étiquettes et on est ramené à une authentification simple, sans identification, l'élément de référence étant le même pour toutes les étiquettes.

Dans le cas d'une authentification identifiée, il est nécessaire de constituer au préalable une base de données de référence avec des données de référence correspondant à chaque étiquette authentique individuelle, et il est ensuite possible de vérifier l'authenticité d'une étiquette suspecte par comparaison avec l'étiquette de référence correspondante.

On décrira ci-dessous le processus d'enrôlement, c'est-à-dire de création d'une base de données de référence.

Chaque étiquette authentique créée est identifiable par l'équivalent d'un code unique, qui peut être par exemple un code barres, ou encore un code de points de couleurs ou de points noirs et blancs, de tailles différentes.

A l'aide de l'appareil photographique 103, on procède à la prise d'au moins deux photographies successives d'une étiquette authentique à référencer, l'une étant prise avec flash et l'autre sans flash, ou selon une variante à la prise d'une seule photographie par exemple sans flash.

On procède à une identification simple par lecture du code unique d'identification sur l'une ou l'autre des photographies ou sur toutes les photographies successives de la même étiquette authentique à référencer.

On procède à un calcul d'empreinte numérique de référence à partir des prises de vue successives de l'étiquette authentique, en prenant comme descripteur par exemple des contours d'une zone d'éléments optiquement variables.

Les empreintes numériques de référence calculées correspondant aux diverses étiquettes authentiques photographiées sont enregistrées dans une base de données de référence 106 du serveur 105 avec comme clef d'entrée leur code unique d'identification déterminé lors de l'étape d'identification simple.

La phase de contrôle d'une étiquette suspecte comprend d'abord l'étape 118 de prise de deux ou plusieurs photographies successives de cette étiquette d'une part sans flash$_{[FD2]}$, en utilisant la lumière ambiante, avec une source d'éclairage distante, plus ou moins diffuse et en position aléatoire et d'autre part avec flash, à l'aide de l'appareil de prise de vue 107, dans des conditions d'éclairement dans le domaine de fréquences de la lumière visible.

Comme représenté sur la figure 8, dans le cas d'étiquettes à motifs holographiques aléatoires (bloc 140), il existe deux variantes principales de réalisation.

Selon la variante de réalisation comprenant les étapes 141 à 143 et 147 à 150, on procède à l'étape 141 de façon locale au niveau de l'appareil de prise de vue intelligent 107 à une identification simple de l'étiquette suspecte à l'aide d'un code d'identification tel qu'un code barres ou un code à points.

A l'étape 142, on procède de façon locale à l'aide de l'unité de calcul 112 de l'appareil de prise de vue 107 à l'authentification simple à partir de deux ou plusieurs photographies successives de l'étiquette à vérifier prises respectivement avec et sans flash, puis au calcul d'une empreinte numérique de vérification, en prenant comme descripteurs par exemple des contours d'une zone supposée comprendre des éléments optiquement variables.

A l'étape 143, on procède à l'envoi au serveur 105 de l'empreinte numérique de vérification calculée localement à l'étape 142.

A l'étape 147, on recherche sur le serveur 105, à l'aide de l'identifiant déterminé lors de l'étape 141 d'identification simple, l'empreinte numérique de référence censée correspondre à l'empreinte numérique de vérification calculée à l'étape 142.

A l'étape 148, on procède sur le serveur 105 à la comparaison de l'empreinte numérique de référence trouvée à l'étape 147 et de l'empreinte numérique de vérification envoyée au serveur à l'étape 143.

L'étape 149 correspond à un diagnostic d'authentification identifiée, à partir du résultat de la comparaison des empreintes numériques dans le serveur 105 et l'étape 150 correspond au renvoi du diagnostic vers l'appareil de prise de vue 107 à travers l'unité de communication 109 de cet appareil.

La variante de réalisation comprenant les étapes 144 à 150 de la figure 8 est similaire, mais dans ce cas aucun traitement local n'est effectué.

A l'étape 144, deux ou plusieurs photographies successives de l'étiquette à vérifier prises respectivement avec et sans flash par l'appareil de prise de vue 107, dans des conditions d'éclairement dans le domaine de fréquences de la lumière visible, sont envoyées au serveur 105.

A l'étape 145, on procède de façon déportée dans le serveur 105 à une identification simple de l'étiquette suspecte à l'aide d'un code d'identification tel qu'un code barres ou un code à points pouvant être lu sur les images de l'étiquette suspecte transmises au serveur à l'étape précédente 144.

A l'étape 146, on procède dans le serveur 105 à l'authentification simple à partir de deux ou plusieurs photographies successives de l'étiquette suspecte à vérifier prises respectivement avec et sans flash , puis au calcul d'une empreinte numérique de vérification, en prenant comme descripteurs par exemple des contours d'une zone supposée comprendre des éléments optiquement variables.

On retrouve ensuite les étapes 147 à 150 qui sont les mêmes que dans la variante de réalisation précédemment décrite comprenant les étapes 141 à 143 et 147 à 150.

Dans le cas où le calcul d'empreinte est effectué de façon locale (étape 142), la bande passante nécessaire pour communiquer entre l'appareil de prise de vue 107 et le serveur 105 est réduite puisque la taille d'une empreinte numérique est très inférieure à celle d'une image. Toutefois, dans ce cas le code compilé de calcul de l'empreinte de l'étiquette à vérifier se trouve stocké dans la mémoire de l'appareil de prise de vue 107, de sorte que ce mode de réalisation doit être privilégié dans les cas où il n'existe pas de risque de malveillance et de fuite du code au niveau de l'appareil de prise de vue 107. Au contraire, dans le cas où le calcul d'empreinte est effectué au niveau du serveur 105, la bande passante nécessaire pour communiquer entre l'appareil de prise de vue 107 et le serveur 105 est plus importante, puisque l'on transfère des images, mais la sécurité est plus grande, car aucun code compilé de calcul d'empreinte numérique n'est stocké au niveau local dans l'appareil de prise de vue 107.

Dans le processus de vérification, le calcul d'empreinte est analogue à celui précédemment effectué pour l'enrôlement dans la base de référence et les mêmes descripteurs sont calculés après que l'étiquette suspecte a été identifiée d'après un code numérique, afin d'aller chercher la référence concernée dans la base de données.

Le fait que dans les deux cas considérés la comparaison d'empreinte de l'étape 148 soit effectuée dans le serveur 105 garantit la protection de l'intégrité de la base de données de référence.

Une fois que les descripteurs de l'empreinte de l'étiquette à vérifier et de l'empreinte de l'étiquette de référence ont été comparés un à un, il est possible, si le résultat est positif, de certifier l'authentification identifiée à l'étape 149 et à l'étape 150 le serveur peut alors renvoyer le diagnostic du contrôle à l'appareil de prise de vue 107 constituant un terminal intelligent.

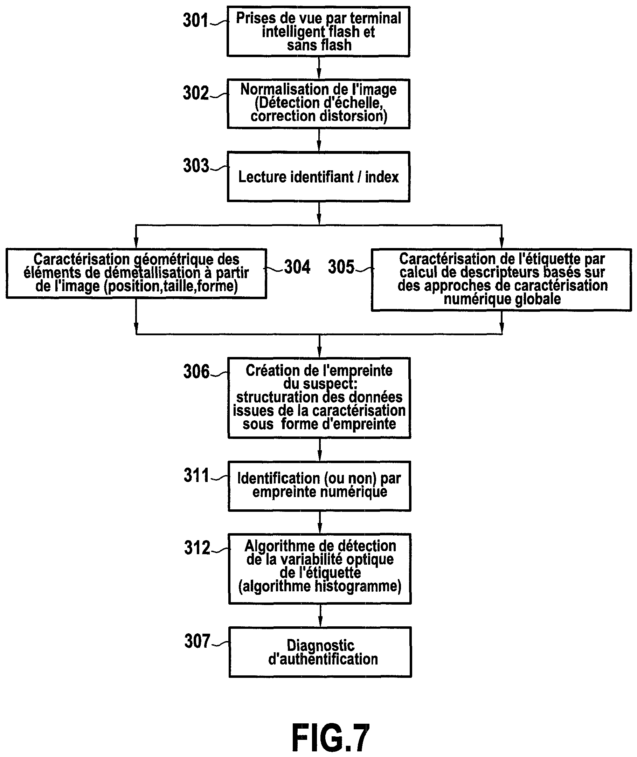

Les figures 6 et 7 illustrent des modes de réalisation préférentiels de l'invention.

La figure 6 illustre un procédé de création d'une base de données de référence comprenant des empreintes d'étiquettes authentiques de référence.

A l'étape 201, on procède à la prise de vue d'une étiquette authentique 101 à l'aide d'un appareil de prise de vue 103 dans des conditions d'éclairage optimisées, dans le domaine de fréquences de la lumière visible.

A l'étape 202, on procède à une normalisation de l'image (détection d'échelle, correction de distorsion).

A l'étape 203 on procède à la lecture d'un identifiant ou index sur l'étiquette 101.

L'étape suivante de caractérisation de l'étiquette authentique peut faire l'objet de plusieurs variantes. L'image de l'étiquette donnée par la zone de démétallisation peut être considérée comme une macrotexture dont les éléments de la démétallisation forment les attributs et sont disposés aléatoirement sur la surface de l'étiquette. Toute approche d'analyse de macrotexture peut être utilisée dans ce contexte.

Selon une première variante possible, illustrée par l'étape 204, on procède à une caractérisation géométrique des éléments de démétallisation à partir de l'image. Dans cette caractérisation des éléments de démétallisation par une approche structurelle, chacun de ces éléments est caractérisé par au moins sa position dans l'espace par rapport à un élément de référence de l'étiquette, sa taille et sa forme.

Selon une autre variante possible, illustrée par l'étape 205, et qui peut être mise en œuvre de façon alternative ou cumulative avec l'étape 204, on procède à une caractérisation globale. Dans cette caractérisation de l'étiquette par un calcul de descripteurs basés sur des approches de caractérisation numérique globale, on procède à une caractérisation de la distribution spatiale des éléments de démétallisation. L'image de l'étiquette peut en effet être considérée comme une macrotexture dont les éléments de démétallisation forment les primitives. Cette partie de l'étiquette peut donc être caractérisée par l'analyse de la distribution spatiale de ces éléments de démétallisation. Un exemple de procédé de caractérisation par une approche globale en vue de constituer une base d'empreintes numériques est décrit dans le document WO 2005/055086 A1.

L'étape suivante 206 consiste en la création d'une empreinte par structuration et sauvegarde des données issues de la caractérisation effectuée à l'étape 204 et/ou à l'étape 205.

L'étape 207 comprend le renvoi d'un diagnostic permettant par exemple d'éliminer les étiquettes dont l'empreinte serait de mauvaise qualité et l'étape 208 comprend la mise en base de données de l'empreinte créée à l'étape 206 avec comme index l'identifiant de l'étiquette.

On notera que la variante 204 est intéressante si tous les détails de l'étiquette ne sont pas tout le temps visibles selon la luminosité (c'est-à-dire lors d'une photo sans flash au moment du contrôle). Dans ce cas, lors de l'enrôlement, on détaille tous les éléments existants de manière individuelle afin lors du contrôle de vérifier que tous ceux qui sont présents sont inclus dans l'ensemble d'enrôlement.

La variante de l'étape 205 peut être utile si les photos sont de bonne qualité et lorsque les éléments de démétallisation sont susceptibles de tous apparaître sans exception au moment de la photo sans flash lors du contrôle. Dans ce cas, il n'est pas nécessaire de descendre au niveau de granularité des éléments de démétallisation individuels et la caractérisation globale servant à caractériser les images fixes est suffisante.

La figure 7 illustre un exemple de procédé de contrôle d'une étiquette suspecte à l'aide d'un terminal intelligent tel qu'un téléphone mobile 107 muni des fonctions définies précédemment en référence à la figure 9.

A l'étape 301 on procède à l'identification des caractéristiques du terminal intelligent 107 utilisé et à la prise d'au moins deux photographies successives rapprochées dans un très court intervalle de temps (de préférence inférieur à une seconde) de l'étiquette suspecte dont l'authenticité est à étudier, au moins l'une des prises de vue étant faite avec flash et au moins une autre prise de vue étant prise sans flash, dans des conditions d'éclairement dans le domaine de fréquences de la lumière visible.

A l'étape 302, on procède à une normalisation de l'image (détection d'échelle, correction de distorsion).

A l'étape 303, on procède à une lecture de l'identifiant/index de l'étiquette suspecte et à la récupération dans la base de données de référence de l'empreinte numérique correspondant à l'identifiant/index.

L'étape suivante comprend la caractérisation de l'étiquette suspecte et peut faire l'objet de plusieurs variantes d'une façon analogue aux étapes 204, 205 précédemment décrites.

Selon une première variante possible correspondant à l'étape 304, on procède à une caractérisation géométrique des éléments de démétallisation à partir de l'image, c'est-à-dire par une approche structurelle, chacun des éléments de démétallisation étant caractérisé par sa position dans l'espace par rapport à un élément de référence de l'étiquette, par sa taille et par sa forme.

Selon une autre variante possible correspondant à l'étape 305, on procède à une caractérisation de l'étiquette par calcul de descripteurs basés sur des approches de caractérisation numérique globale. L'image de l'étiquette pouvant être considérée comme une macrotexture dont les éléments de démétallisation forment les primitives, la partie de l'étiquette supposée comporter des éléments de démétallisation est caractérisée par l'analyse de la distribution spatiale de ces éléments. Là encore on peut se référer pour plus de détails au document WO 2005/055086 A1.

L'étape 306 suivante de création de l'empreinte comprend la structuration des données issues de la caractérisation de l'étape 304 et/ou de l'étape 305.

A l'étape 311 on peut de façon optionnelle procéder à une identification par empreinte numérique.

On procède à un calcul de distance entre l'empreinte de l'étiquette suspecte 102 et l'empreinte de l'étiquette de référence 101. Si la distance est supérieure à un seuil prédéterminé, alors il s'agit d'une imitation de l'étiquette de référence, sinon l'identification graphique est confirmée. Il est à noter qu'au lieu de faire référence à un seuil, on pourrait de façon équivalente utiliser d'autres méthodes, telles que des méthodes probabilistes, pour décider si une étiquette suspecte est valide.

A l'étape 312, on procède à la détection du caractère optiquement variable de l'étiquette, avant l'étape finale 307 de diagnostic d'authentification.

Pour la détection du caractère optiquement variable, on peut mettre en œuvre un algorithme utilisant l'histogramme sur la différence entre image prise avec flash et image prise sans flash.

Toutefois, dans certains cas particuliers, et notamment si l'on a bien répertorié géométriquement chaque élément de démétallisation, on peut effectuer un recadrage (cropping) de chaque élément de la démétallisation sur chacune des photos prises avec et sans flash. On mesure la différence entre ces deux photos, la mesure pouvant être une simple mesure d'histogramme. S'il existe une différence significative entre les deux photos, alors, cet élément de démétallisation est classifié comme optiquement variable. L'algorithme effectue l'opération précédente sur chaque élément de démétallisation. Si le nombre d'éléments de démétallisation à avoir montré une variabilité optique est supérieur à un seuil prédéterminé, alors l'étiquette précédemment identifiée est maintenant authentifiée. Le procédé d'authentification selon l'invention utilise de façon simple des phénomènes optiques qui se situent dans le domaine de la fréquence de la lumière visible et dont on mesure la différence, sans qu'il soit nécessaire de faire appel à des appareillages spécialisés.

En résumé, le procédé d'authentification selon l'invention consiste en particulier à utiliser une étiquette de sécurité munie d'éléments optiquement variables, à calculer une empreinte numérique de ces éléments optiquement variables par un procédé qui, selon une réalisation particulière, peut comprendre des prises de vues successives dans des conditions d'éclairage différentes pour une étiquette de sécurité de référence authentique, à répéter ces opérations pour une étiquette de sécurité suspecte à authentifier et à procéder à une comparaison des empreintes numériques calculées pour fournir un diagnostic d'authentification pour l'étiquette à authentifier. Toutefois, en ce qui concerne l'étiquette de sécurité de référence authentique, on peut se contenter d'une seule prise de vue dans des conditions d'éclairage prédéfinies, par exemple dans des conditions de lumière ambiante, pour définir une empreinte numérique.

Le procédé selon l'invention peut donc être facilement mis en œuvre et permet de détecter de façon rapide, sûre et automatique des étiquettes fausses ou d'authentifier des étiquettes authentiques, sans devoir faire appel à des appareillages spécifiques et coûteux, ni à des techniques de manipulation délicates.

Le procédé selon l'invention peut être appliqué à tout type d'étiquette de sécurité, dès lors que cette étiquette de sécurité comprend au moins une zone à éléments optiquement variables présentant des propriétés de réflexion différentes à la surface de l'étiquette pour une source de lumière dans le domaine de fréquences de la lumière visible (telle qu'un flash) orientée de façon prédéterminée par rapport à cette surface (par exemple perpendiculairement à celle-ci).

La zone active de l'étiquette de sécurité doit ainsi pouvoir présenter un pouvoir réfléchissant mais non éblouissant. Pour cela il suffit que la quantité d'éléments optiquement variables soit inférieure à un seuil de saturation de l'appareil de prise de vue 103 ou 107.

En pratique, les éléments optiquement variables doivent présenter des propriétés de réflexion différentes de celles du reste de la surface du document, c'est-à-dire des propriétés de réflexion différentes de celles de matériaux tels que le papier, le carton ou une matière plastique. La proportion d'éléments optiquement variables dans une zone d'intérêt ne devrait pas représenter plus de la moitié de la surface de cette zone et de préférence pas plus d'un tiers de cette surface.

**Revendications**

1.  Procédé d'authentification automatique d'un document sécurisé comportant au moins une partie formant étiquette, **caractérisé en ce qu'**il comprend les étapes suivantes :

    a) impression d'une étiquette authentique (101) munie d'éléments optiquement variables comprenant au moins une première zone (10) à éléments optiquement variables d'un premier type présentant des propriétés de réflexion différentes à la surface de l'étiquette pour une source de lumière dans le domaine de fréquences de la lumière visible orientée de façon prédéterminée par rapport à ladite surface, lesdits éléments optiquement variables du premier type comprenant des motifs holographiques de démétallisation constitués par des éléments graphiques métallisés dans une bande transparente ou des éléments graphiques transparents dans une bande métallisée holographique,

    b) photographie de ladite étiquette authentique (101) au moins dans des premières conditions d'éclairement dans le domaine de fréquences de la lumière visible, pour créer au moins une première image de référence,

    c) calcul d'une empreinte numérique de référence de l'étiquette à partir de ladite au moins première image de référence et enregistrement de ladite empreinte numérique de référence,

    d) photographie d'une étiquette à vérifier (102) d'un document sécurisé dont l'authenticité est à vérifier, dans des conditions similaires à celles de l'étiquette authentique (101), sous un même angle de prise de vue successivement au moins dans des premières conditions d'éclairement dans le domaine de fréquences de la lumière visible et dans des deuxièmes conditions d'éclairement essentiellement différentes de celles des premières conditions d'éclairement dans le même domaine de fréquences de la lumière visible, pour créer au moins des première et deuxième images de vérification, à l'aide d'un appareil de prise de vue (107) muni au moins d'une unité de communication (109), d'une unité de mémoire (113) et d'une unité de calcul (112),

    e) vérification du caractère optiquement variable à partir desdites au moins première et deuxième images de vérification et calcul d'une empreinte numérique de vérification de l'étiquette à vérifier à partir d'au moins l'une desdites au moins première et deuxième images de vérification,

f) comparaison de l'empreinte numérique de vérification et de l'empreinte numérique de référence correspondante, calcul de la distance entre ces deux empreintes numériques et comparaison de cette distance par rapport à un seuil prédéterminé pour n'authentifier l'étiquette à vérifier (102) du document sécurisé à authentifier que si cette distance est inférieure ou égale audit seuil.

2. Procédé selon la revendication 1, **caractérisé en ce que** l'une des première et deuxième conditions d'éclairement consiste en un éclairage à l'aide d'un flash (104, 108), tandis que l'autre des première et deuxième conditions d'éclairement consiste en un éclairage à lumière ambiante sans flash.

3. Procédé selon l'une quelconque des revendications 1 et 2, **caractérisé en ce que** l'on procède à l'impression d'une étiquette authentique (101) comprenant au moins ladite première zone (10) à éléments optiquement variables du premier type et une deuxième zone (20) juxtaposée à ladite première zone (10) et comprenant des éléments graphiques aléatoires d'identification.

4. Procédé selon la revendication 3, **caractérisé en ce que** lesdites première et deuxième zones (10, 20) sont divisées chacune en une pluralité de sous-zones (11 à 14, 21 à 24), et **en ce que** les sous-zones (11 à 14, 21 à 24) des première et deuxième zones (10, 20) sont juxtaposées en alternance de façon imbriquée.

5. Procédé selon la revendication 4, **caractérisé en ce que** chaque sous-zone essentiellement rectangulaire présente une largeur comprise entre 0,5 et 5 mm.

6. Procédé selon l'une quelconque des revendications 1 à 5, **caractérisé en ce que** lesdits éléments optiquement variables définissent un motif holographique géométriquement invariant et **en ce que** pour créer une image de référence, on procède aux étapes suivantes :

   i) photographie d'une étiquette
   ii) localisation d'une mire sur l'étiquette,
   iii) normalisation d'une zone d'intérêt de l'étiquette grâce à la localisation de la mire,
   iv) caractérisation des contours de la zone d'intérêt dans laquelle est située ladite première zone à éléments optiquement variables.
   v) Création d'une empreinte par structuration et sauvegarde de ladite empreinte en tant qu'empreinte de référence.

7. Procédé selon l'une quelconque des revendications 1 à 5, **caractérisé en ce que** lesdits éléments optiquement variables définissent un motif holographique géométriquement variable et **en ce que**, préalablement à une étape de mise en service de l'étiquette, afin de créer une base de données de références, on procède aux étapes suivantes:

   i) photographie d'une étiquette
   ii) localisation d'une mire sur l'étiquette,
   iii) normalisation d'une zone d'intérêt de l'étiquette grâce à la localisation de la mire,
   iv) identification de l'étiquette par lecture d'une partie codée (20) située dans la zone d'intérêt et caractérisation des contours de la zone d'intérêt dans laquelle est située ladite première zone (10) à éléments optiquement variables.
   v) Création d'une empreinte par structuration et sauvegarde de cette empreinte en tant qu'empreinte numérique de référence indexée par un identifiant dans une base de données de référence (106).

8. Procédé selon la revendication 7, **caractérisé en ce que**, après l'étape de calcul d'une empreinte numérique de référence de l'étiquette à partir de ladite au moins première image de référence, suivie par l'enregistrement de ladite empreinte numérique de référence indexée par un identifiant dans une base de données de référence (106), ladite étape de comparaison est effectuée entre l'empreinte numérique de vérification et l'empreinte numérique de référence indexée correspondante stockée dans la base de données de référence (106).

9. Procédé selon la revendication 6, **caractérisé en ce que** l'on stocke l'empreinte numérique de référence localement dans ladite unité de mémoire (113) de l'appareil de prise de vue (107) et **en ce que** l'on effectue localement à l'aide de l'unité de calcul (112) de l'appareil de prise de vue (107) les étapes de calcul d'authentification consistant à vérifier que l'étiquette à vérifier comporte les éléments optiquement variables attendus.

10. Procédé selon la revendication 6 ou la revendication 7, **caractérisé en ce que** l'on stocke la base de données de référence dans un serveur (105) déporté par rapport audit appareil de prise de vue (107), **en ce que** l'on effectue localement à l'aide de l'unité de calcul (112) de l'appareil de prise de vue (107) l'étape de calcul d'une empreinte numérique de vérification, **en ce que** l'on transmet audit serveur (105) par l'unité de communication (109) dudit appareil de prise de vue (107) ladite empreinte numérique de vérification pour procéder au sein de ce serveur (105) à l'étape de comparaison de l'empreinte numérique de vérification et de l'empreinte numérique de référence et à l'étape d'authentification simple et d'authentification identifiée.

**11.** Procédé selon la revendication 6 ou la revendication 7, **caractérisé en ce que** l'on stocke la base de données de référence dans un serveur (105) déporté par rapport audit appareil de prise de vue (107), **en ce que** l'on transmet audit serveur (105) par l'unité de communication (109) dudit appareil de prise de vue (107) lesdites première et deuxième images de vérification, et **en ce que** l'on effectue au sein dudit serveur (105) les étapes de calcul d'une empreinte numérique de vérification, de comparaison de l'empreinte numérique de vérification et de l'empreinte numérique de référence et d'authentification simple et d'authentification identifiée.

**12.** Procédé selon la revendication 10 ou la revendication 11, **caractérisé en ce qu'**il comprend en outre une étape finale consistant à transmettre à l'unité de communication (109) de l'appareil de prise de vue (107) le résultat de l'étape d'authentification réalisée sur le serveur (105).

**13.** Procédé selon l'une quelconque des revendications 1 à 12, **caractérisé en ce que** lors de l'étape de création d'une empreinte numérique, on procède à une caractérisation géométrique desdits éléments optiquement variables à partir de l'image.

**14.** Procédé selon l'une quelconque des revendications 1 à 12, **caractérisé en ce que** lors de l'étape de création d'une empreinte numérique, on procède à une caractérisation de l'étiquette par calcul de descripteurs basés sur des approches de caractérisation numérique globale.

**15.** Procédé selon l'une quelconque des revendications 1 à 14, **caractérisé en ce que** lors de l'étape de photographie d'une étiquette à vérifier (102), les photographies successives pour créer au moins lesdites première et deuxième images de vérification sont effectuées en rafale dans un intervalle de temps inférieur ou égal à une seconde.

**16.** Etiquette munie d'éléments optiquement variables pour document sécurisé à authentifier, **caractérisée en ce qu'**elle comprend une zone d'intérêt avec au moins une première zone (10) à éléments optiquement variables présentant des propriétés de réflexion différentes à la surface de l'étiquette pour une source de lumière dans le domaine de fréquence de la lumière visible orientée de façon prédéterminée par rapport à ladite surface et une deuxième zone (20) juxtaposée à ladite première zone (10) et comprenant des éléments graphiques aléatoires d'identification, lesdites première et deuxième zones (10, 20) étant divisées chacune en une pluralité de sous-zones (11 à 14, 21 à 24) agencées de telle manière que les sous-zones (11 à 14, 21 à 24) des première et deuxième zones (10, 20) sont juxtaposées en alternance de façon imbriquée.

**Patentansprüche**

**1.** Verfahren zur automatischen Authentifizierung eines Sicherheitsdokuments, das mindestens einen Teil umfasst, der ein Etikett bildet, **dadurch gekennzeichnet, dass** es die folgenden Schritte umfasst:

a) Drucken eines mit optisch veränderlichen Elementen versehenen echten Etiketts (101), das mindestens eine erste Zone (10) mit optisch veränderlichen Elementen von einem ersten Typ umfasst, die Reflexionseigenschaften aufweisen, die sich für eine Lichtquelle im Frequenzbereich des sichtbaren Lichts, die auf eine vorbestimmte Weise in Bezug auf die Oberfläche ausgerichtet ist, von der Oberfläche des Etiketts unterscheiden, wobei die optisch veränderlichen Elemente vom ersten Typ holografische Entmetallisierungsmotive umfassen, die aus metallisierten grafischen Elementen in einem transparenten Band oder aus transparenten grafischen Elementen in einem metallisierten holografischen Band bestehen,
b) Fotografieren des echten Etiketts (101) in mindestens ersten Beleuchtungsbedingungen im Frequenzbereich des sichtbaren Lichts, um mindestens ein erstes Bezugsbild zu erzeugen,
c) Berechnen eines digitalen Bezugsabdrucks des Etiketts ausgehend von mindestens dem ersten Bezugsbild und Aufzeichnen des digitalen Bezugsabdrucks,
d) Fotografieren eines zu überprüfenden Etiketts (102) eines Sicherheitsdokuments, dessen Echtheit zu überprüfen ist, in Bedingungen, die denjenigen des echten Etiketts (101) ähnlich sind, aus einem gleichen Aufnahmewinkel aufeinanderfolgend zumindest in ersten Beleuchtungsbedingungen im Frequenzbereich des sichtbaren Lichts und in zweiten Beleuchtungsbedingungen, die sich im Wesentlichen von den ersten Beleuchtungsbedingungen unterscheiden, in dem gleichen Frequenzbereich des sichtbaren Lichts, um mindestens ein erstes und ein zweites Überprüfungsbild zu erzeugen, mittels einer Bildaufnahmevorrichtung (107), die mit mindestens einer Kommunikationseinheit (109), mit einer Speichereinheit (113) und mit einer Recheneinheit (112) versehen ist,

e) Überprüfen der optisch veränderlichen Eigenschaft ausgehend von mindestens dem ersten und dem zweiten Überprüfungsbild und Berechnen eines digitalen Überprüfungsabdrucks des zu überprüfenden Etiketts ausgehend von mindestens einem von dem mindestens einen ersten und zweiten Überprüfungsbild,

f) Vergleichen des digitalen Überprüfungsabdrucks und des entsprechenden digitalen Bezugsabdrucks, Berechnen der Distanz zwischen diesen zwei digitalen Abdrücken und Vergleichen dieser Distanz in Bezug auf einen vorbestimmten Schwellenwert, um das zu überprüfende Etikett (102) des zu authentifizierenden Sicherheitsdokuments nur zu authentifizieren, wenn diese Distanz kleiner als oder gleich dem Schwellenwert ist.

2. Verfahren nach Anspruch 1, **dadurch gekennzeichnet, dass** eine von der ersten und der zweiten Beleuchtungsbedingung aus einer Beleuchtung mittels eines Blitzlichts (104, 108) besteht, während die andere von der ersten und der zweiten Beleuchtungsbedingung aus einer Beleuchtung mit Umgebungslicht ohne Blitzlicht besteht.

3. Verfahren nach einem der Ansprüche 1 und 2, **dadurch gekennzeichnet, dass** das Drucken eines echten Etiketts (101) vorgenommen wird, das mindestens die erste Zone (10) mit optisch veränderlichen Elementen vom ersten Typ und eine zweite Zone (20) umfasst, die neben der ersten Zone (10) liegt und zufällige grafische Identifikationselemente umfasst.

4. Verfahren nach Anspruch 3, **dadurch gekennzeichnet, dass** die erste und die zweite Zone (10, 20) jeweils in eine Vielzahl von Unterzonen (11 bis 14, 21 bis 24) unterteilt sind, und dadurch, dass die Unterzonen (11 bis 14, 21 bis 24) der ersten und der zweiten Zone (10, 20) auf verschachtelte Weise abwechselnd nebeneinander liegen.

5. Verfahren nach Anspruch 4, **dadurch gekennzeichnet, dass** jede im Wesentlichen rechtwinklige Unterzone eine Breite zwischen 0,5 und 5 mm aufweist.

6. Verfahren nach einem der Ansprüche 1 bis 5, **dadurch gekennzeichnet, dass** die optisch veränderlichen Elemente ein geometrisch unveränderliches holografisches Motiv definieren, und dadurch, dass zum Erzeugen eines Bezugsbildes die folgenden Schritte durchgeführt werden:

   i) Fotografieren eines Etiketts,
   ii) Lokalisieren einer Zielvorrichtung auf dem Etikett,
   iii) Normalisieren einer Zone von Interesse des Etiketts mittels des Lokalisierens der Zielvorrichtung,
   iv) Charakterisieren der Konturen der Zone von Interesse, in der sich die erste Zone mit optisch veränderlichen Elementen befindet,
   v) Erzeugen eines Abdrucks durch Strukturieren und Speichern des Abdrucks als Bezugsabdruck.

7. Verfahren nach einem der Ansprüche 1 bis 5, **dadurch gekennzeichnet, dass** die optisch veränderlichen Elemente ein geometrisch veränderliches holografisches Motiv definieren, und dadurch, dass vor einem Schritt des Inbetriebnehmens des Etiketts die folgenden Schritte durchgeführt werden, um eine Bezugsdatenbank zu erzeugen:

   i) Fotografieren eines Etiketts,
   ii) Lokalisieren einer Zielvorrichtung auf dem Etikett,
   iii) Normalisieren einer Zone von Interesse des Etiketts mittels des Lokalisierens der Zielvorrichtung,
   iv) Identifizieren des Etiketts durch Lesen eines codierten Teils (20), der sich in der Zone von Interesse befindet, und Charakterisieren der Konturen der Zone von Interesse, in der sich die erste Zone (10) mit optisch veränderlichen Elementen befindet,
   v) Erzeugen eines Abdrucks durch Strukturieren und Speichern dieses Abdrucks als digitaler Bezugsabdruck, der durch eine Kennung in einer Bezugsdatenbank (106) indexiert ist.

8. Verfahren nach Anspruch 7, **dadurch gekennzeichnet, dass** nach dem Schritt des Berechnens eines digitalen Bezugsabdrucks des Etiketts ausgehend von dem mindestens einen Bezugsbild, gefolgt vom Aufzeichnen des digitalen Bezugsabdrucks, der durch eine Kennung in einer Bezugsdatenbank (106) indexiert ist, der Vergleichsschritt zwischen dem digitalen Überprüfungsabdruck und dem entsprechenden indexierten digitalen Bezugsabdruck durchgeführt wird, der in der Bezugsdatenbank (106) gespeichert ist.

9. Verfahren nach Anspruch 6, **dadurch gekennzeichnet, dass** der digitale Bezugsabdruck lokal in der Speichereinheit (113) der Bildaufnahmevorrichtung (107) gespeichert wird, und dadurch, dass die Schritte der Authentifizierungsberechnung, die darin bestehen, zu überprüfen, dass das zu überprüfende Etikett die erwarteten optisch veränderlichen Elemente umfasst, lokal mittels der Recheneinheit (112) der Bildaufnahmevorrichtung (107) durchgeführt werden.

10. Verfahren nach Anspruch 6 oder Anspruch 7, **dadurch gekennzeichnet, dass** die Bezugsdatenbank in einem in Bezug auf die Bildaufnahmevorrichtung (107) entfernten Server (105) gespeichert wird, dadurch, dass der Schritt des Berechnens eines digitalen Überprüfungsabdrucks lokal mittels der Recheneinheit (112) der Bildaufnahmevorrichtung (107) durchgeführt wird, dadurch, dass der digitale Überprüfungsabdruck von der Kommunikationseinheit (109) der Bildaufnahmevorrichtung (107) an den Server (105) übertragen wird, um den Schritt des Vergleichens des digitalen Überprüfungsabdrucks und des digitalen Bezugsabdrucks und den Schritt der einfachen Authentifizierung und der identifizierten Authentifizierung in diesem Server (105) vorzunehmen.

11. Verfahren nach Anspruch 6 oder Anspruch 7, **dadurch gekennzeichnet, dass** die Bezugsdatenbank in einem in Bezug auf die Bildaufnahmevorrichtung (107) entfernten Server (105) gespeichert wird, dadurch, dass das erste und das zweite Überprüfungsbild von der Kommunikationseinheit (109) der Bildaufnahmevorrichtung (107) an den Server (105) übertragen werden, und dadurch, dass in dem Server (105) die Schritte des Berechnens eines digitalen Überprüfungsabdrucks, des Vergleichens des digitalen Überprüfungsabdrucks und des digitalen Bezugsabdrucks und der einfachen Authentifizierung und der identifizierten Authentifizierung durchgeführt werden.

12. Verfahren nach Anspruch 10 oder Anspruch 11, **dadurch gekennzeichnet, dass** es ferner einen Endschritt umfasst, der darin besteht, das Ergebnis des auf dem Server (105) ausgeführten Authentifizierungsschritts an die Kommunikationseinheit (109) der Bildaufnahmevorrichtung (107) zu übertragen.

13. Verfahren nach einem der Ansprüche 1 bis 12, **dadurch gekennzeichnet, dass** beim Schritt des Erzeugens eines digitalen Abdrucks eine geometrische Charakterisierung der optisch veränderlichen Elemente ausgehend von dem Bild vorgenommen wird.

14. Verfahren nach einem der Ansprüche 1 bis 12, **dadurch gekennzeichnet, dass** bei dem Schritt des Erzeugens eines digitalen Abdrucks eine Charakterisierung des Etiketts durch Berechnung von Deskriptoren vorgenommen wird, die auf globalen digitalen Charakterisierungsansätzen beruhen.

15. Verfahren nach einem der Ansprüche 1 bis 14, **dadurch gekennzeichnet, dass** beim Schritt des Fotografierens eines zu überprüfenden Etiketts (102) die aufeinanderfolgenden Fotografien zum Erzeugen des mindestens einen ersten und zweiten Überprüfungsbildes in Serien in einem Zeitintervall durchgeführt werden, das kleiner als oder gleich eine Sekunde ist.

16. Etikett, das mit optisch veränderlichen Elementen für ein zu authentifizierendes Sicherheitsdokument versehen ist, **dadurch gekennzeichnet, dass** es eine Zone von Interesse mit mindestens einer ersten Zone (10) mit optisch veränderlichen Elementen umfasst, die Reflexionseigenschaften aufweisen, die sich für eine Lichtquelle im Frequenzbereich des sichtbaren Lichts, die auf eine vorbestimmte Weise in Bezug auf die Oberfläche ausgerichtet ist, von der Oberfläche des Etiketts unterscheiden, und einer zweiten Zone (20) umfasst, die neben der ersten Zone (10) liegt und zufällige grafische Identifikationselemente umfasst, wobei die erste und die zweite Zone (10, 20) jeweils in eine Vielzahl von Unterzonen (11 bis 14, 21 bis 24) unterteilt sind, die derart eingerichtet sind, dass die Unterzonen (11 bis 14, 21 bis 24) der ersten und der zweiten Zone (10, 20) auf verschachtelte Weise abwechselnd nebeneinander liegen.

## Claims

1. A method of automatically authenticating a secure document including at least one label-forming portion, the method being **characterized in that** it comprises the following steps:

    a) printing an authentic label (101) provided with optically-variable elements including at least a first zone (10) of optically-variable elements of a first type presenting reflection properties that are different from the surface of the label for a light source in the visible light frequency range oriented in predetermined manner relative to said surface, said optically-variable elements of the first type comprising holographic patterns of foil removal constituted by foil graphics elements in a transparent strip or by transparent graphics elements in a holographic foil strip;

b) photographing said authentic label (101) at least under first lighting conditions in the visible light frequency range in order to create at least one first reference image;

c) calculating a reference digital fingerprint of the label from said at least one first reference image and storing said reference digital fingerprint;

d) photographing a label that is to be verified (102) of a secure document of authenticity that is to be verified under conditions similar to the conditions in which the authentic label (101) was photographed, shooting from the same angle and in succession at least in first lighting conditions in the visible light frequency range and in second lighting conditions essentially different from the first lighting conditions and in the same visible light frequency range, in order to create at least first and second verification images, using a camera (107) having at least a communications unit (109), a memory unit (113), and a calculation unit (112);

e) verifying the optically-variable nature of said elements from said at least first and second verification images and calculating a verification digital fingerprint of the label for verification from at least one of said first and second verification images; and

f) comparing the verification digital fingerprint and the corresponding reference digital fingerprint, calculating the distance between these two digital fingerprints, and comparing said distance with a predetermined threshold in order to authenticate the label (102) for verification of the secure document that is to be authenticated only if said distance is less than or equal to said threshold.

2. A method according to claim 1, **characterized in that** one of the first and second lighting conditions consists in lighting with the help of a flash (104, 108), while the other one of the first and second lighting conditions consists in lighting in ambient light without flash.

3. A method according to any one of claims 1 and 2, **characterized in that** an authentic label (101) is printed that includes at least said first zone (10) with optically-variable elements of the first type, and a second zone (20) juxtaposed with said first zone (10) and including random graphics elements for identification purposes.

4. A method according to claim 3, **characterized in that** each of said first and second zones (10, 20) is divided into a plurality of subzones (11 to 14, 21 to 24), and **in that** the subzones (11 to 14, 21 to 24) of the first and second zones (10, 20) are juxtaposed in alternation in interleaved manner.

5. A method according to claim 4, **characterized in that** each essentially rectangular subzone presents a width lying in the range 0.5 mm to 5 mm.

6. A method according to any one of claims 1 to 5, **characterized in that** said optically-variable elements define a geometrically-invariant holographic pattern, and **in that** in order to create a reference image, the following steps are performed:

i) photographing a label;
ii) locating a graticule on the label;
iii) normalizing a zone of interest of the label as a result of locating the graticule;
iv) characterizing outlines of the zone of interest in which there is situated said first zone of optically-variable elements; and
v) creating a fingerprint by structuring and saving said fingerprint as a reference fingerprint.

7. A method according to any one of claims 1 to 5, **characterized in that** said optically-variable elements define a geometrically-variable holographic pattern, and **in that**, prior to a step of putting the label into service, and in order to create a reference database, the following steps are performed:

i) photographing a label;
ii) locating a graticule on the label;
iii) normalizing a zone of interest of the label as a result of locating the graticule;
iv) identifying the label by reading an encoded portion (20) situated in the zone of interest and characterizing outlines of the zone of interest in which there is situated said first zone (10) having optically-variable elements; and
v) creating a fingerprint by structuring and saving the fingerprint as a reference digital fingerprint indexed by an identifier in a reference database (106).

8. A method according to claim 7, **characterized in that**, after the step of calculating a reference digital fingerprint of the label from said at least first reference image, followed by recording said reference digital fingerprint indexed by an identifier in a reference database (106), said comparison step is performed between the verification digital fingerprint and the corresponding indexed referenced digital fingerprint stored in the reference database (106).

9. A method according to claim 6, **characterized in that** the reference digital fingerprint is stored locally in said memory unit (113) of the camera (107), and **in that** the calculation unit (112) of the camera (107) is used locally to perform the authentication calculation step consisting in verifying that the label for verification includes the expected optically-variable elements.

10. A method according to claim 6 or claim 7, **characterized in that** the reference database is stored in a server (105) that is remote from said camera (107), **in that** the calculation unit (112) of the camera (107) is used locally to perform the step of calculating the verification digital fingerprint, and **in that** the communications unit (109) of said camera (107) is used to transmit said verification digital fingerprint to said server (105) in order to enable said server (105) to perform the step of comparing the verification digital fingerprint with the reference digital fingerprint and the step of performing authentication only and the step of performing authentication and identification.

11. A method according to claim 6 or claim 7, **characterized in that** the reference database is stored in a server (105) that is remote from said camera (107), **in that** the communications unit (109) of said camera (107) is used to transmit said first and second verification images to said server (105), and **in that** said server (105) is used to perform the steps of calculating the verification digital fingerprint, of comparing the verification digital fingerprint with the reference digital fingerprint, and of performing authentication only and authentication with identification.

12. A method according to claim 10 or claim 11, **characterized in that** it further includes a final step consisting in transmitting the result of the authentication step performed by the server (105) to the communications unit (109) of the camera (107).

13. A method according to any one of claims 1 to 12, **characterized in that**, during the step of creating a digital fingerprint, said optically-variable elements are characterized geometrically from the image.

14. A method according to any one of claims 1 to 12, **characterized in that**, during the step of creating a digital fingerprint, the label is **characterized by** calculating descriptors based on global digital characterization approaches.

15. A method according to any one of claims 1 to 14, **characterized in that**, during the step of photographing a label (102) for verification, the successive photographs for creating at least said first and second verification images are taken in a burst over a time interval that is less than or equal to one second.

16. A label provided with optically-variable elements for a secure document that is to be authenticated, the label being **characterized in that** it comprises a zone of interest having at least a first zone (10) with optically-variable elements presenting reflection properties that are different from the surface of the label for a light source in the visible light frequency range oriented in predetermined manner relative to said surface, and a second zone (20) juxtaposed with said first zone (10) and including random graphics elements for identification purposes, each of said first and second zones (10, 20) being subdivided into a plurality of subzones (11 to 14, 21 to 24) arranged in such a manner that the subzones (11 to 14, 21 to 24) of the first and second zones (10, 20) are juxtaposed in alternation in interleaved manner.

FIG.1

FIG.2

10A          20A

FIG.3

10B          20B

FIG.4

FIG.5

**FIG.6**

301 — Prises de vue par terminal intelligent flash et sans flash

302 — Normalisation de l'image (Détection d'échelle, correction distorsion)

303 — Lecture identifiant / index

304 — Caractérisation géométrique des éléments de démétallisation à partir de l'image (position,taille,forme)

305 — Caractérisation de l'étiquette par calcul de descripteurs basés sur des approches de caractérisation numérique globale

306 — Création de l'empreinte du suspect: structuration des données issues de la caractérisation sous forme d'empreinte

311 — Identification (ou non) par empreinte numérique

312 — Algorithme de détection de la variabilité optique de l'étiquette (algorithme histogramme)

307 — Diagnostic d'authentification

FIG.7

23

Prise de deux ou plusieurs photos successives ⸺118

Motifs holographiques aléatoires ⸺140

Motifs holographiques à design invariant ⸺120

Envoi d'images au serveur
144

Identification simple (local)
141

Algorithme d'authentification non identifiée (local)
121

Calcul de l'empreinte numérique pour authentification non identifiée (local)
124

Envoi d'images au serveur
129

Identification simple (déportée)
145

Calcul de l'empreinte numérique pour authentification identifiée (local)
142

Diagnostic d'authentification non identifiée (local)
122

Envoi de l'empreinte numérique au serveur
125

Algorithme d'authentification non identifiée (déporté)
130

Calcul de l'empreinte numérique pour authentification identifiée (déporté)
146

Envoi des empreintes numériques au serveur
143

Renvoi du diagnostic
123

Algorithme de comparaison de l'empreinte numérique (déporté)
126

Recherche de l'empreinte de réf sur le serveur (déporté)
147

Diagnostic d'authentification non identifiée
127

Algorithme de comparaison de l'empreinte numérique pour authentification identifiée (déporté)
148

Renvoi du diagnostic
128

Diagnostic d'authentification identifiée
149

Renvoi du diagnostic
150

# FIG.8

103

116

106

105

FIG.9

101

107
111 110

109 113 108
112

102

47
46
45
44
42 43
41

FIG.10

56
55
54
52 53
51

FIG.11

## RÉFÉRENCES CITÉES DANS LA DESCRIPTION

**Documents brevets cités dans la description**

- US 20040188528 A1
- WO 2010094859 A
- WO 9847714 A
- WO 2007087498 A
- US 20050175230 A1
- WO 2005055086 A1